# EUROPÄISCHE PATENTSCHRIFT

(11) **EP 2 766 774 B1**
(45) Veröffentlichungstag und Bekanntmachung des Hinweises auf die Patenterteilung: **16.01.2019**
(21) Anmeldenummer: 12769407.3
(22) Anmeldetag: 01.10.2012
(51) Int. Cl.: G02F 1/155, B32B 17/00

(54) **ELEKTROCHROME ISOLIERVERGLASUNG MIT KAPAZITIVER SENSORSCHALTFLÄCHE**
ELECTROCHROME INSULATING GLAZING WITH CAPACITIVE SENSOR BUTTON
VITRAGE ISOLANT ÉLECTROCHROME DOTÉ D'UN BOUTON DE COMMANDE DE CAPTEUR CAPACITIF

(30) Priorität: 10.10.2011 EP 11184475
(43) Veröffentlichungstag der Anmeldung: 20.08.2014
(73) Patentinhaber: Saint-Gobain Glass France, 92400 Courbevoie (FR)
(72) Erfinder: YEH, Li-Ya, 52511 Geilenkirchen (DE); DROSTE, Stefan, 52134 Herzogenrath (DE); ORILLARD, Julien, 75015 Paris (FR); WEBER, Patrick, 52477 Alsdorf (DE)
(74) Vertreter: Splanemann
(86) Internationale Anmeldenummer: PCT/EP2012/069324
(87) Internationale Veröffentlichungsnummer: WO 2013/053611

(56) Entgegenhaltungen:
- DE-A1-102006 042 538
- US-A- 5 889 608
- US-A1- 2009 243 824
- US-A1- 2011 216 389

## Beschreibung

Die Erfindung betrifft eine Isolierverglasung mit einem elektrochromen Schichtsystem und einer kapazitiven Sensorschaltfläche, ein Verfahren zur Herstellung einer derartigen Isolierverglasung sowie deren Verwendung.

In Gebäuden und Verkehrsmitteln, wie Bussen und Bahnen, werden immer häufiger großflächige Verglasungen im Fenster-, Wand- und Türbereich eingesetzt. Aus Gründen der Energieeinsparung und des Komforts werden an diese Verglasungen hohe Anforderungen bezüglich ihrer wärmeisolierenden Eigenschaften gestellt. Es kommen hauptsächlich Mehrscheiben-Isoliergläser zum Einsatz, bei denen mehrere Glasscheiben über Abstandhalter miteinander verbunden sind und die Wärmedurchgangskoeffizienten von U ≤ 2 W/m²K aufweisen.

Großflächige Verglasungen, insbesondere in Gebäuden, bedingen auch einen großen Wärmeeintrag durch Sonnenstrahlung. Dies führt zu einem übermäßigen Aufheizen der Innenräume, was wiederum hohe Energiekosten für die notwendige Klimatisierung zur Folge hat. Abhilfe schaffen Verglasungen mit elektrochromen Schichtsystemen, bei denen die Lichtdurchlässigkeit und damit der Wärmeeintrag durch Sonnenlicht durch Anlegen einer elektrischen Spannung gesteuert werden kann. Ein Fenster mit Doppelverglasung und elektrochromen Schichtsystem hat im transparenten Zustand üblicherweise eine Lichtdurchlässigkeit von etwa 62 % und eine Durchlässigkeit für Wärmestrahlung von etwa 40 %. Die gleiche Verglasung hat im gefärbten Zustand des elektrochromen Schichtsystems eine Lichtdurchlässigkeit von etwa 4 % und eine Durchlässigkeit von Wärmestrahlung von weniger als 2 %. Geeignete elektrochrome Schichtsysteme sind aus EP 0867752 A1, US 2007/0097481 A1 und US 2008/0169185 A1 bekannt.

Elektrochrome Schichtsysteme werden üblicherweise durch Steuerelektroniken mit externen Schaltern betrieben, die sich im Umfeld der Verglasung befinden. Dennoch wäre eine unmittelbare Kontrolle der elektrochromen Funktion an der jeweiligen Verglasung wünschenswert.

US 2009/0243824 A1 zeigt einen Rückspiegel für Fahrzeuge mit einem ersten Substrat, einem zweiten Substrat, einer optisch reflektiven Schicht auf der Innenseite des ersten Substrats, eine Elektrode auf der Innenseite des zweiten Substrats sowie ein elektrochromes Material, das den Bereich zwischen der Elektrode und der optisch reflektiven Schicht vollständig verfüllt. Die Elektrode und die optisch reflektive Schicht dienen nicht als Sensorschaltflächen.

Die Aufgabe der vorliegenden Erfindung besteht nunmehr darin, eine elektrochrome Isolierverglasung mit guten wärmeisolierenden Eigenschaften bereitzustellen, die eine steuerbare großflächige Transparenz aufweist und die über eine kapazitive Sensorschaltfläche auf der Scheibe zum Schalten der elektrochromen Funktion verfügt. Die kapazitive Sensorschaltfläche soll dabei die Transparenz der Scheibe nicht beeinträchtigen.

Die Aufgabe der vorliegenden Erfindung wird erfindungsgemäß durch eine elektrochrome Isolierverglasung mit kapazitiver Sensorschaltfläche gemäß Anspruch 1 gelöst. Bevorzugte Ausführungen gehen aus den Unteransprüchen hervor.

Ein Verfahren zur Herstellung einer elektrochromen Isolierverglasung sowie eine Verwendung der Isolierverglasung gehen aus weiteren unabhängigen Ansprüchen hervor.

Die erfindungsgemäße elektrochrome Isolierverglasung mit Sensorschaltfläche umfasst mindestens:
- eine erste Scheibe und eine zweite Scheibe, die am Rand mit einem umlaufenden Abstandshalter miteinander verbunden sind und einen Zwischenraum aufweisen,
- mindestens ein elektrochromes Schichtsystem, das auf der Innenseite der ersten Scheibe oder der Innenseite der zweiten Scheibe angeordnet ist,
- mindestens eine transparente, elektrisch leitfähige Schicht, die mindestens teilweise auf mindestens einer der Innenseiten oder Außenseiten der ersten oder der zweiten Scheibe angeordnet ist und
- die transparente, elektrisch leitfähige Schicht eine kapazitive Sensorschaltfläche ist.

Die Scheibe enthält bevorzugt vorgespanntes, teilvorgespanntes oder nichtvorgespanntes Glas, besonders bevorzugt Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische oder Schichtstrukturen davon. Beispiele geeigneter Gläser werden in EP 0847965 beschrieben. Die erste und/oder die zweite Scheibe können auch als Verbundsicherheitsscheibe ausgebildet sein. Eine Verbundsicherheitsscheibe enthält zwei oder mehr Scheiben, die mit mindestens einer Zwischenschicht miteinander verbunden sind. Die Zwischenschicht enthält vorzugsweise thermoplastische Kunststoffe, wie Polyvinylbutral (PVB) oder Ethylenvinylacetat (EVA) oder mehrere Schichten davon, bevorzugt mit Dicken von 0,3 mm bis 0,8 mm.

Die Dicke der Scheiben kann breit variieren und so hervorragend den Erfordernissen des Einzelfalls angepasst werden. Scheiben werden bevorzugt mit den Standardstärken von 1,0 mm bis 10 mm und besonders bevorzugt von 4 mm bis 10 mm verwendet. Die Größe der Scheiben kann breit variieren, beispielsweise von 0,4 m x 0,4 m bis 3,2 m x 6 m.

Die Scheiben können eine beliebige dreidimensionale Form aufweisen. Die dreidimensionale Form hat vorzugsweise keine Schattenzonen, so dass sie beispielsweise durch Kathodenzerstäubung mit der transparenten, elektrisch leitfähigen Schicht beschichtet werden können. Die Substrate sind bevorzugt planar oder leicht oder stark in einer Richtung oder in mehreren Richtungen des Raumes gebogen. Insbesondere werden planare Substrate verwendet. Die Scheiben können farblos oder getönt sein, bevorzugt grau oder grün.

In einer bevorzugten Ausführungsform enthält die erfindungsgemäße Isolierverglasung zwei Scheiben, die durch einen Zwischenraum voneinander getrennt sind. Gleichwohl eignen sich auch Isolierverglasungen mit drei oder mehr Scheiben, die jeweils durch einen Zwischenraum voneinander getrennt sind und entsprechend niedrigere Wärmedurchgangswerte als Zweischeibenverglasungen aufweisen.

In einer erfindungsgemäßen Verbundscheibe enthält bevorzugt eine Scheibe Glas und eine Scheiben Kunststoff. Insbesondere bei einer erfindungsgemäßen Verwendung als Fahrzeugscheibe enthält die dem Fahrzeuginnenraum zugewandte Scheibe einen Kunststoff und die dem Fahrzeugaußenraum zugewandte Scheibe Glas.

Beide Scheiben werden durch einen Abstandshalter aus Metall, bevorzugt aus Aluminium oder Edelstahl, oder durch einen Kunststoff in einem festen Abstand zueinander gehalten. Die Abstandshalter weisen bevorzugt ein U-förmiges Profil auf und bestehen aus einem oder mehreren Elementen. Der Abstand zwischen der ersten und der zweiten Scheibe beträgt bevorzugt von 5 mm bis 20 mm, besonders bevorzugt von 10 mm bis 15 mm und kann den Erfordernissen des Einzelfalls angepasst werden.

Der umlaufende Spalt zwischen den beiden Scheiben wird bevorzugt am Rand mit einem Kunststoffmaterial versiegelt, beispielsweise einem Kleber oder einer Dichtschnur auf Basis von Polyvinylbutyral, Polysulfit, Polyurethan, Acryl oder Silikon. Die Versiegelung des Randspalts schützt die korrosionsempfindliche transparente, elektrisch leitfähige Schicht vor Feuchtigkeit. Die Randversiegelung kann auch als Abstandshalter dienen und die Scheiben auf einem definierten Abstand halten.

Erfindungsgemäß enthält der Zwischenraum zwischen beiden Scheiben ein Gas oder ein Gasgemisch, beispielsweise Luft oder Inertgase wie Argon, Krypton oder Stickstoff. Alternativ ist der Zwischenraum evakuiert oder im Zwischenraum ist ein Unterdruck, das heißt ein Druck, der niedriger als der Atmosphärendruck der Umgebung ist. Dadurch wird der Wärmedurchgangskoeffizient der Isolierverglasung erniedrigt. Eine Befüllung mit Inertgasen hat den besonderen Vorteil, dass die korrosionsempfindliche transparente, elektrisch leitfähige Schicht und das elektrochrome Schichtsystem vor Korrosion geschützt werden.

Üblicherweise wird ein Trocknungsmittel in den Zwischenraum zwischen beiden Scheiben eingebracht. Das Trocknungsmittel ist beispielsweise in einem Hohlraum der Abstandshalter angeordnet. Geeignete Trocknungsmittel für den Einsatz in Isolierverglasungen sind beispielsweise Silicagele, Zeolithe, Silikate, CaCl₂, Na₂SO₄, Aktivkohle, Bentonite und/oder Gemische davon. Die Trocknungsmittel können Wasser aufnehmen und physikalisch binden. Die Trockenmittel sind bevorzugt so angeordnet, dass ein Gas- und Feuchtigkeitsaustausch mit der Atmosphäre im Inneren der Isolierverglasung möglich ist, die Materialien aber nicht umherfliegen können und fixiert sind. Dies kann bevorzugt durch Einschließen der Trockenmittel in einen luft- und feuchtigkeitsdurchlässigen Polymerfilm oder in einem feinmaschigen Netz erfolgen. Durch das Trocknungsmittel wird die Bildung von Wasserdampf im Scheibenzwischenraum verhindert und ein störendes Beschlagen der Scheibe vermieden, wenn durch Unterschreiten der Taupunkttemperatur der Wasserdampf kondensiert. Außerdem werden die korrosionsempfindliche transparente, elektrisch leitfähige Schicht und das elektrochrome Schichtsystem vor Feuchtigkeit geschützt.

Die Isolierverglasung weist beispielsweise einen Wärmewiderstandswert U ≤ 2 W/m²K auf, bevorzugt von 0,1 W/m²K bis 0,7 W/m²K.

Auf einer der Innenseiten der Scheiben ist ein elektrochromes Schichtsystem angeordnet. Das elektrochrome Schichtsystem enthält beispielsweise einen Schichtaufbau aus einer transparenten leitfähigen Elektrode, einer elektrochromen Elektrode, einem lonenleiter, einer Gegenelektrode und einer weiteren transparenten leitfähigen Elektrode. Solche elektrochromen Schichtsysteme werden beispielsweise in US 2007/097481 A1 und US 2008/0169185 A1 beschrieben. Gleichwohl sind andere elektrochrome Schichtsysteme ebenfalls für die erfindungsgemäße Isolierverglasung geeignet. Beispiele solcher Systeme finden sich in EP 0867752 A1.
Die transparente leitfähige Elektrode enthält bevorzugt dotiertes oder nicht dotiertes Indiumoxid, Zinnoxid, Indium-Zinnoxid, Zinkoxid oder Rutheniumoxid. Die elektrochrome Elektrode enthält wohlbekannte elektrochemisch aktive Materialien, die geeignet sind, Ionen aus der Gegenelektrode aufzunehmen. Solche Materialien sind bevorzugt WO₃, V₂O₅, MoO₃, Nb₂O₅, TiO₂, CuO, Ni₂O, Ir₂O₃, Cr₂O₃, Co₂O₃, Mn₂O₃ oder Mischoxide wie W-Mo-Oxid oder W-V-Oxid. Die genannten Metalloxide können dotiert sein, beispielsweise mit Lithium, Natrium, Kalium, Molybdän, Vanadium oder Titan. Oberhalb der elektrochromen Elektrode ist ein lonenleiter angeordnet. Der lonenleiter enthält vorzugsweise einen Feststoffelektrolyten, der für die Migration von Ionen und insbesondere für Lithiumionen durchlässig ist. Der lonenleiter enthält bevorzugt Lithium-basierte Keramiken, wie Lithiumsilikat, Lithium-Aluminium-Silikat, Lithium-Aluminium-Borat, Lithium-Borat, Lithium-Zirkonium-Borat, Lithium-Niobat, Lithium-Borsilikat, Lithium-Phosphosilikat, Lithium-Nitrid, Lithium-Aluminium-Fluorid. Oberhalb des lonenleiters ist eine Gegenelektrode angeordnet. Die Gegenelektrode ist dazu geeignet Ionen aufzunehmen und sie spannungsgesteuert wieder freizusetzen. Wird die Gegenelektrode entladen, so färbt sich die vorher transparente Schicht.
Mindestens eine der Scheiben der erfindungsgemäßen Isolierverglasung ist auf einer Innenseite oder Außenseite mindestens teilweise mit einer transparenten, elektrisch leitfähigen Schicht beschichtet. Die transparente, elektrisch leitfähige Schicht bildet die kapazitive Sensorschaltfläche aus. In einer vorteilhaften Ausgestaltung der erfindungsgemäßen Isolierverglasung sind das elektrochrome Schichtsystem auf der Innenseite der ersten Scheibe und die kapazitive Sensorschaltfläche auf der Innenseite der zweiten Scheibe angeordnet. Innenseite bedeutet hier die Seite einer Scheibe, die jeweils der anderen Scheibe der Isolierverglasung zugewandt ist. In einer bevorzugten Ausgestaltung der erfindungsgemäßen Isolierverglasung, insbesondere bei Verwendung als Verglasung im Außenbereich, ist die erste Scheibe die der Sonne zugewandte Seite. Dies hat den besonderen Vorteil, dass das elektrochrome Schichtsystem im gefärbten Zustand besonders viel eingestrahltes Sonnenlicht absorbiert oder reflektiert. Durch den Zwischenraum wird wenig Wärmeenergie zur zweiten Scheibe weitergeleitet. Dies führt zu einem nur geringen Wärmeeintrag durch die Isolierverglasung. Außerdem befinden sich beide kratz- und korrosionsempfindlichen Schichten im Inneren der Isolierverglasung und werden durch die Scheiben vor direkter Berührung von außen geschützt.

In einer bevorzugten Ausgestaltung der erfindungsgemäßen Isolierverglasung enthält die transparente, elektrisch leitfähige Schicht mindestens ein Metall, bevorzugt Silber, Nickel, Chrom, Niob, Zinn, Titan, Kupfer, Palladium, Zink, Gold, Cadmium, Aluminium, Silizium, Wolfram oder Legierungen daraus, und/oder mindestens eine Metalloxidschicht, bevorzugt Zinn-dotiertes Indiumoxid (ITO), Aluminium-dotiertes Zinkoxid (AZO), Fluor-dotiertes Zinnoxid (FTO, SnO₂:F), Antimon-dotiertes Zinnoxid (ATO, SnO₂:Sb), und/oder Kohlenstoffnanoröhrchen und/oder optisch transparente, elektrisch leitfähige Polymere, bevorzugt Poly(3,4-ethylenedioxythiophene), Polystyrensulfonat, Poly(4,4-dioctylcylopentadithiophen), 2,3-Dichloro-5,6-dicyano-1,4-benzoquinon, Gemische und/oder Copolymere davon.

Die erfindungsgemäße transparente, elektrisch leitfähige Schicht ist vorteilhafterweise für elektromagnetische Strahlung, vorzugsweise elektromagnetische Strahlung einer Wellenlänge von 300 nm bis 1.300 nm, insbesondere für sichtbares Licht, durchlässig. "Durchlässig" bedeutet, dass die Transmission der transparenten, elektrisch leitfähigen Schicht bevorzugt >50% und insbesondere >70% ist. Für die Verwendung der erfindungsgemäßen Isolierverglasung als Fahrzeugverglasung muss die Gesamttransmission des Scheibenverbunds den gesetzlichen Bestimmungen entsprechen.

Geeignete transparente, elektrisch leitfähige Schichten sind aus DE 20 2008 017 611 U1 und EP 0 847 965 B1 bekannt. Sie bestehen beispielsweise aus einer Metallschicht wie einer Silberschicht oder einer Schicht aus einer silberhaltigen Metalllegierung. Typische Silberschichten weisen bevorzugt Dicken von 5 nm bis 15 nm auf, besonders bevorzugt von 8 nm bis 12 nm. Die Metallschicht kann zwischen mindestens zwei Schichten aus dielektrischem Material vom Typ Metalloxid eingebettet sein. Das Metalloxid enthält bevorzugt Zinkoxid, Zinnoxid, Indiumoxid, Titanoxid, Siliziumoxid, Aluminiumoxid oder dergleichen sowie Kombinationen von einem oder mehreren daraus. Das dielektrische Material kann auch Siliziumnitrid, Siliziumcarbid, Aluminiumnitrid sowie Kombinationen von einem oder mehreren davon enthalten.

Der Schichtaufbau wird im Allgemeinen durch eine Folge von Abscheidevorgängen erhalten, die durch ein Vakuumverfahren wie die magnetfeldgestützte Kathodenzerstäubung oder durch chemische Gasphasenabscheidung (CVD) durchgeführt werden. Auf beiden Seiten der Silberschicht können auch sehr feine Metallschichten vorgesehen sein, die insbesondere Titan oder Niob enthalten. Die untere Metallschicht dient als Haft- und Kristallisationsschicht. Die obere Metallschicht dient als Schutz- und Getterschicht, um eine Veränderung des Silbers während der weiteren Prozessschritte zu verhindern.

Die erfindungsgemäßen transparenten, elektrisch leitfähigen Schichten haben bevorzugt einen Flächenwiderstand von 0,1 Ohm/Quadrat bis 200 Ohm/Quadrat, besonders bevorzugt von 1 Ohm/Quadrat bis 50 Ohm/Quadrat und ganz besonders bevorzugt von 1 Ohm/Quadrat bis 10 Ohm/Quadrat.

Im Falle der Verwendung einer Verbundsicherheitsscheibe als erste und/oder zweite Scheibe ist die transparente, elektrisch leitfähige Schicht bevorzugt im Inneren des Verbundsicherheitsglases oder auf der dem hohlen Zwischenraum zugewandten Seite der Verbundsicherheitsscheibe angeordnet. Dies hat den besonderen Vorteil, dass die transparente, elektrisch leitfähige Schicht besonders vor mechanischer Beanspruchung und Korrosion geschützt ist.

Die transparente, elektrisch leitfähige Schicht erstreckt sich bevorzugt über die gesamte Fläche der Seite der Scheibe, auf die sie aufgebracht ist, abzüglich eines umlaufenden rahmenförmigen entschichteten Bereichs mit einer Breite von 2 mm bis 20 mm, bevorzugt von 5 mm bis 10 mm. Dieser dient der elektrischen Isolierung zwischen der transparenten, elektrisch leitfähigen Schicht und dem Rahmen. Außerdem wird eine Korrosion der transparenten, elektrisch leitfähigen Schicht durch von außen in die Schicht eindringende Feuchtigkeit verhindert.

Die Metallschichtsysteme können eine besonders niedrige Emissivität für Infrarotstrahlung aufweisen und die langwellige Infrarot-Strahlung großteilig reflektieren. Die Infrarotstrahlung weist hier bevorzugt eine Wellenlänge von ≥ 780 nm auf und liegt insbesondere im nahen Infrarotbereich von 780 nm bis 1400 nm. Derartige Metallschichtsysteme werden üblicherweise als niedrig-emissive Beschichtung oder als Low-e-Beschichtung bezeichnet. Die Emissivität eines Materials ergibt sich aus der Energieabstrahlung einer Oberfläche des Materials dividiert durch die Energieabstrahlung eines physikalisch schwarzen Körpers bei gleicher Temperatur. Die Emissivität ist demnach eine dimensionslose Größe mit Werten zwischen 0 und 1. Ein physikalisch schwarzer Körper hat somit die Emissivität 1. Erfindungsgemäß geeignete Metallschichtsysteme haben beispielsweise eine Emissivität von 0,2 bis 0,5 und enthalten beispielsweise mehrere durch Dielektrika getrennte Silberschichten.

Bei der erfindungsgemäßen Isolierverglasung ist auf mindestens einer der Innenseiten der Isolierverglasung und insbesondere auf der Innenseite der dem Gebäude- oder Fahrzeuginneren zugewandten Seite, eine großflächige transparente, elektrisch leitfähige Schicht angeordnet. Die großflächige, transparente, elektrisch leitfähige Schicht hat bevorzugt eine niedrige Emissivität. Dies hat den besonderen Vorteil, dass die Wärmeeinstrahlung in den Innenraum reduziert wird und der Wärmedurchgangskoeffizient der Isolierverglasung erniedrigt wird. Die transparente, elektrisch leitfähige Beschichtung, die die kapazitive Sensorschaltfläche ausbildet, ist vorzugsweise identisch mit der großflächigen transparenten, elektrisch leitfähigen Beschichtung. In einer alternativen Ausgestaltung der erfindungsgemäßen Isolierverglasung ist die großflächige transparente, elektrisch leitfähige Schicht in mehrere Bereiche unterteilt. Die Unterteilung erfolgt bevorzugt mittels Laserstrukturierung oder mechanischem Abtragen. Mindestens ein Bereich, bevorzugt zwei Bereiche bilden dann die kapazitive Sensorschaltfläche. Alternativ kann die kapazitive Sensorfläche durch eine weitere transparente, elektrisch leitfähige Schicht ausgebildet werden, die auf einer anderen Seite der Scheiben angeordnet ist.

Die transparente, elektrisch leitfähige Schicht und die großflächige transparente, elektrisch leitfähige Schicht haben bevorzugt den gleichen Schichtaufbau und die gleiche Schichtzusammensetzung. Dies ermöglicht eine einfache Herstellung und gleichförmige optische Eigenschaften.

In einer alternativen Ausgestaltung der erfindungsgemäßen Isolierverglasung ist die transparente, elektrisch leitfähige Schicht über eine Polymerfolie mit einer Seite der Scheibe verbunden. Die Polymerfolie enthält bevorzugt Polyethylenterephthalat und/oder Polyurethan. In einer bevorzugten Ausgestaltung wird die transparente, elektrisch leitfähige Schicht auf einer Folie aus Polyethylenterephthalat angeordnet und anschließend einseitig oder beidseitig mit Klebefolien laminiert. Der Schichtverbund wird dann auf einer Seite der Scheibe angeordnet und befestigt, beispielsweise durch die Klebefolie. Erfindungsgemäße Klebefolien enthalten beispielsweise Polyurethan. Dies hat den besonderen Vorteil, dass die empfindliche transparente, elektrisch leitfähige Schicht durch den Schichtverbund stabilisiert und gegen mechanische Einwirkungen geschützt wird. Der Schichtverbund lässt sich besonders einfach und kostengünstig verarbeiten.

In einer vorteilhaften Ausgestaltung der erfindungsgemäßen Isolierverglasung wird die kapazitive Sensorschaltfläche durch mindestens zwei und bevorzugt durch zwei voneinander elektrisch isolierte Bereiche der transparenten elektrisch leitfähigen Schicht gebildet. Die voneinander elektrisch isolierten Bereiche können beispielsweise kammartig nebeneinander angeordnet sein. Die Bereiche können als getrennte elektrisch isolierte Bereiche, beispielsweise durch Maskierungstechniken aufgebracht werden. Alternativ kann eine flächige transparente, elektrisch leitfähige Schicht aufgebracht werden, die durch Einschnitte getrennt wird, beispielsweise durch Laserablation oder mechanisches Abtragen. Die Bereiche weisen bevorzugt einen minimalen Abstand von weniger oder gleich 1 mm, besonders bevorzugt von weniger oder gleich 0,5 mm und ganz besonders bevorzugt von 0,01 mm bis 0,3 mm auf. Dies hat den besonderen Vorteil, dass die Kapazität zwischen den durch die zwei Bereiche ausgebildeten Flächen besonders präzise messbar ist.

In einer weiteren vorteilhaften Ausgestaltung der erfindungsgemäßen Isolierverglasung beträgt die Fläche der kapazitiven Sensorschaltfläche weniger als 50%, bevorzugt weniger als 25% und insbesondere weniger als 10% der Scheibe.

Da die kapazitive Sensorschaltfläche und die dazugehörigen Zuleitungen im Wesentlichen transparent sind, kann die genaue Position der kapazitiven Sensorschaltfläche durch einen Aufdruck zum leichteren Auffinden markiert werden. Der Aufdruck kann schwarz oder farbig sein. Der Aufdruck kann deckend oder transparent sein oder auch lumineszierend. Der Aufdruck kann eine beliebige Form aufweisen, beispielsweise eine Beschriftung oder ein Firmenlogo und muss nicht der Form der kapazitiven Sensorschaltfläche entsprechen. Alternativ kann die kapazitive Sensorschaltfläche durch andere Maßnahmen angezeigt werden, beispielsweise einer Mattierung oder Ätzung der Scheibenoberfläche.

Ein weiterer Aspekt der Erfindung betrifft eine Anordnung mit elektrochromer Isolierverglasung und kapazitiver Sensorschaltfläche, wobei die kapazitive Sensorschaltfläche und das elektrochrome Schichtsystem mit einer Schaltungsanordnung elektrisch leitend verbunden sind. Die elektrisch leitende Verbindung, insbesondere zwischen kapazitiver Sensorschaltfläche und Schaltungsanordnung, kann dabei kapazitiv oder galvanisch erfolgen.

Die Schaltungsanordnung enthält beispielsweise eine Sensorelektronik und eine Steuerelektronik, wobei Sensorelektronik und Steuerelektronik miteinander verbunden sind. Die Schaltungsanordnung ist beispielsweise Mikrocontroller gesteuert.

Die Schaltungsanordnung misst beispielsweise über die Sensorelektronik die Kapazität eines Bereichs der transparenten, elektrisch leitfähigen Schicht gegen Erde oder die Kapazität zweier oder mehrere Bereiche der transparenten, elektrisch leitfähigen Schicht gegeneinander. Wird eine Kapazitätsänderung detektiert, so gibt die Sensorelektronik ein Steuersignal an die Steuerelektronik. Die Steuerelektronik steuert die Färbung des elektrochromen Schichtsystems, in dem sie eine geeignete Steuerspannung an das elektrochrome Schichtsystem ausgibt. Geeignete Spannungswerte sind jeweils von dem verwendeten elektrochromen Schichtsystem abhängig. Die Spannungswerte werden beispielsweise so gewählt, dass bei einem Spannungswert das elektrochrome Schichtsystem seinen farblosen Zustand mit maximaler Transparenz für sichtbares Licht annimmt und bei einem anderen Spannungswert das elektrochrome Schichtsystem seine maximale Färbung und minimale Transparenz annimmt.

Eine Sensorelektronik für einen kapazitiven Schalter ist aus DE 20 2005 010 379 U1 bekannt. In einer einfachen Ausführung wird die Kapazität der kapazitiven Sensorschaltfläche durch einen Kapazitäts-/Spannungswandler gemessen. Die kapazitive Sensorschaltfläche wird durch die Sensorelektronik auf eine vorgegebene Spannung geladen. Der zum Aufladen benötigte Stromfluss wird gemessen und in ein Spannungssignal gewandelt. Anschließend wird die kapazitive Sensorschaltfläche entladen und erneut auf die vorgegebene Spannung geladen. Eine Änderung der Kapazität der kapazitiven Sensorschaltfläche kann durch die Änderung des Spannungssignals gemessen werden. Die Kapazität der kapazitiven Sensorschaltfläche gegen Erde ändert sich, wenn eine geerdeter Körper, beispielsweise ein Mensch, in ihre Nähe kommt oder sie berührt. Alternativ kann die kapazitive Sensorschaltfläche zwei Bereiche enthalten und die Kapazität zwischen beiden Bereichen gemessen werden.

Die Änderungen des Spannungssignals können durch ein Differenzierglied verstärkt und über einen Komparator mit einem Schwellwert verglichen werden. Übersteigt die Änderung des Spannungssignals einen Schwellwert gibt der Komparator ein Ausgangssignal aus. Das Ausgangssignal wird beispielsweise der Steuerelektronik zur Spannungskontrolle des elektrochromen Schichtsystems (Electrochrome Controller) zugeführt.

Eine Kapazitätsänderung kann durch einen nicht schwingenden Oszillator erfasst werden, der durch die Kapazitätsänderung zum Anschwingen gebracht wird. Alternativ kann ein schwingender Oszillator so stark bedämpft werden, dass seine Schwingung abreißt. Eine Sensorelektronik mit Oszillator ist aus EP 0 899 882 A1 bekannt.

Die kapazitive Sensorschaltfläche ist über Zuleitungen auf der Scheibe nach außen verbunden. In einer bevorzugten Ausgestaltung der erfindungsgemäßen Isolierverglasung können die Zuleitungen sehr dünne und optisch kaum wahrnehmbare Kabel oder Drähte im Zwischenraum zwischen den beiden Scheiben umfassen. Die Zuleitungen können durch Aufdrucken einer leitfähigen Paste auf beschichtungsfreie Bereiche der Scheiben hergestellt werden. Die leitfähige Paste wird auf die Scheibe eingebrannt und enthält bevorzugt Silber-Partikel und Glasfritten. Die Schichtdicke der eingebrannten Silber-Paste beträgt insbesondere von 5 µm bis 20 µm. Alternativ können die Zuleitungen aus einer flächigen, transparenten, elektrisch leitfähigen Schicht hergestellt werden, beispielsweise durch Laserablation.

Durch Kopplung können mehrere Isolierverglasungen gleichzeitig geschaltet werden, beispielsweise mehrere Fenster und Glasflächen. So kann eine Dachverglasung durch eine Fensterverglasung mit kapazitiver Sensorschaltfläche gesteuert werden. Des Weiteren können mehrere kapazitiven Sensorschaltflächen auf einer Isolierverglasung angeordnet werden. Jede kapazitive Sensorschaltfläche kann auch andere Aufgaben erfüllen, die von der elektrochromen Schichtstruktur unabhängig sind, beispielsweise Funktionen von Jalousien, die Ausgabe eines Meldesignals für eine Türklingel oder beliebige andere Schaltfunktionen.

Die Erfindung umfasst außerdem ein Verfahren zur Herstellung einer Isolierverglasung mit kapazitiver Sensorschaltfläche, wobei mindestens:
a. erste Scheibe und/oder zweite Scheibe mit einer transparenten, elektrisch leitfähigen Schicht beschichtet wird,
b. erste Scheibe und/oder zweite Scheibe mit einem elektrochromen Schichtsystem beschichtet wird,
c. die zweite Scheibe und die erste Scheibe mit einem Abstandhalter auf einem definierten Abstand gehalten werden und
d. der umlaufende Spalt zwischen der ersten Scheibe, der zweiten Scheibe und dem Abstandshalter mit einer umlaufenden Randversiegelung verschlossen wird.

Erfindungsgemäß wird im Schritt a) die erste und/oder die zweite Scheibe mit einer großflächigen transparenten, elektrisch leitfähigen Schicht beschichtet und der Bereich oder die Bereiche, die die kapazitive Sensorschaltfläche ausbilden, durch Laserstrukturierung von der großflächigen transparenten, elektrisch leitfähigen Schicht isoliert. Der Laser für die Strukturierung hat bevorzugt eine Wellenlänge von 300 nm bis 1100 nm und eine kurze Pulsdauer im Bereich von Nanosekunden oder Pikosekunden.

In einer alternativen Ausführungsform des erfindungsgemäßen Verfahrens wird in Schritt a) die kapazitive Sensorschaltfläche auf eine Polymerfolie aufgebracht und die Polymerfolie über eine Klebefolie mit der ersten Scheibe und/oder der zweiten Scheibe verbunden.

Die Erfindung umfasst außerdem die Verwendung der erfindungsgemäßen Isolierverglasung, zur Verglasung von Gebäuden, insbesondere im Zugangs- oder Fensterbereich, als funktionales und/oder dekoratives Einzelstück und/oder als Einbauteil in Möbeln und Geräten oder zur Verglasung in einem Fahrzeug für den Verkehr auf dem Lande, in der Luft oder zu Wasser, insbesondere in Kraftfahrzeugen, beispielsweise als Fahrzeugtür oder Fahrzeugfenster, in Bussen, Straßenbahnen, U-Bahnen, Zügen für den Personenverkehr.

Im Folgenden wird die Erfindung anhand einer Zeichnung näher erläutert. Die Zeichnung ist eine schematische Darstellung und nicht maßstabsgetreu. Die Zeichnung schränkt die Erfindung in keiner Weise ein.

Es zeigen:
Figur 1A eine Draufsicht auf ein Ausführungsbeispiel einer erfindungsgemäßen Isolierverglasung,
Figur 1B eine Querschnittszeichnung entlang der Schnittlinie A-A' in Figur 1A,
Figur 2 einen vergrößerten Ausschnitt der kapazitiven Sensorschaltfläche auf Figur 1A,
Figur 3 eine Querschnittszeichnung entlang der Schnittlinie A-A' in Figur 1A einer alternativen Ausgestaltung einer erfindungsgemäßen Isolierverglasung und
Figur 4 ein Ausführungsbeispiel der erfindungsgemäßen Verfahrensschritte anhand eines Flussdiagramms.

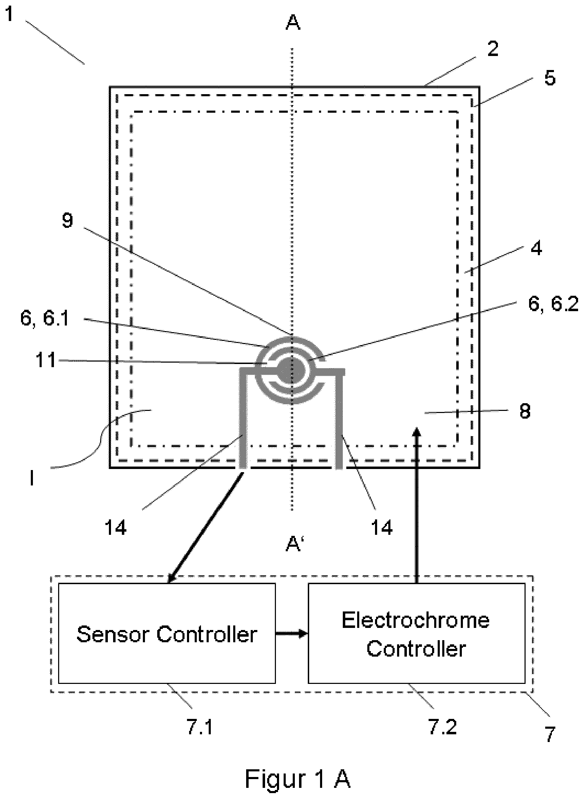

In Figur 1A ist eine erfindungsgemäße Isolierverglasung 1 mit einer kapazitiven Sensorschaltfläche 9 dargestellt. Die kapazitive Sensorschaltfläche 9 ist über Zuleitungen 14 mit einer Schaltungsanordnung 7 galvanisch verbunden. Die Schaltungsanordnung 7 enthält eine Sensorelektronik (Sensor Controller) 7.1 der mit einer Steuerelektronik (Electrochrome Controller) 7.2 zur Spannungssteuerung des elektrochromen Schichtsystems verbunden ist.

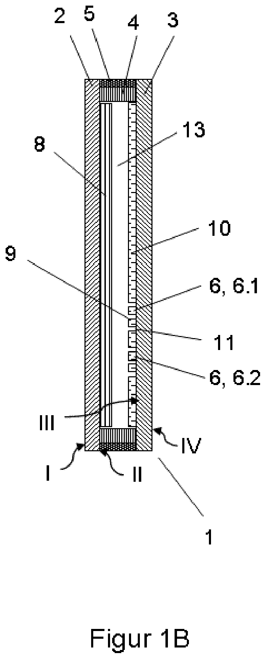

In Figur 1B ist eine Querschnittszeichnung entlang der Schnittlinie A-A' aus Figur 1A dargestellt. Die erste Scheibe 2 ist beispielsweise ein getempertes Klarglas mit einer Dicke von 4 mm bis 10 mm und beispielsweise von 6 mm. Auf der Innenseite II der ersten Scheibe 2 ist ein elektrochromes Schichtsystem angeordnet.

Das elektrochrome Schichtsystem enthält beispielsweise einen Schichtaufbau aus einer transparenten leitfähigen Elektrode, einer elektrochromen Elektrode, einem lonenleiter, einer Gegenelektrode und einer weiteren transparenten leitfähigen Elektrode und ist in US 2007/097481 A1 beschrieben.

Die transparente leitfähige Elektrode enthält beispielsweise Indium-Zinnoxid mit einer Dicke von 10 nm bis 1000 nm. Die elektrochemische Elektrode enthält hier beispielsweise WO₃ oder dotiertes WO₃ mit einer Dicke von etwa 300 nm bis 450 nm. Oberhalb der elektrochromen Elektrode ist ein lonenleiter angeordnet. Der lonenleiter enthält beispielsweise ein Lithium-Siliziumoxid, das mittels Kathodenstrahlzerstäubung oder durch einen Sol-Gel-Prozess abgeschieden wurde. Die Dicke der lonenleiter-Schicht beträgt beispielsweise von 30 nm bis 50 nm. Oberhalb des lonenleiters ist eine Gegenelektrode angeordnet. Die Gegenelektrode enthält beispielsweise ein Gemisch aus Wolfram-Nickel-Oxid, beispielsweise aus Ni₂O₃ und WO₃. Die Gegenelektrode ist dazu geeignet Ionen aufzunehmen und sie spannungsgesteuert wieder freizusetzen. Wird die Gegenelektrode aus Wolfram-Nickel-Oxid entladen, so färbt sich die vorher transparente Schicht mit einer bräunlichen Farbe. Die Gegenelektrode hat beispielsweise eine Dicke von 175 nm bis 200 nm.

Die zweite Scheibe 3 umfasst eine Glasscheibe, die auf der Innenseite III der Scheibe 3 eine großflächige, transparente, elektrisch leitfähige Schicht 10 in Form einer sogenannten niedrig-emissiven Beschichtung aufweist. Die zweite Scheibe 3 ist beispielsweise ein beschichtetes niedrig-emissives, farblich neutrales Glas, SSG Planitherm® von Saint-Gobain Glass mit einer Dicke von 6 mm bis 10 mm und beispielsweise von 8 mm und einem U-Wert von 1,2 W/m²K. Die niedrig-emissive Schicht emittiert langwellige infrarote Strahlung und enthält eine Silberschicht, die zwischen mehreren Metalloxid- und Metallnitrid-Schichten eingebettet ist.

Die erste Scheibe 2 und die zweite Scheibe 3 weisen beispielsweise jeweils eine Fläche von 1 m x 2,5 m auf.

In einer alternativen Ausgestaltung der erfindungsgemäßen Isolierverglasung 1 können die Scheiben und insbesondere die zweite Scheibe 3 eine Verbundglasscheibe aus zwei Einzelscheiben enthalten, wobei die zwei Einzelscheiben durch eine thermoplastische Zwischenschicht wie beispielsweise Ethylenvinylacetat (EVA) miteinander verbunden sind.

Beide Scheiben 2 und 3 werden durch einen umlaufenden Abstandshalter 4, beispielsweise ein Aluminiumhohlprofil auf einen festen Abstand von beispielsweise 13 mm gehalten. Beide Scheiben 2 und 3 sind mit dem Aluminiumhohlprofil verklebt, beispielsweise mittels eines Klebers auf Polyvinylbutyral-Basis, auf Silikon-Basis oder aus einer Kombination von mehreren Klebern. Der Spalt zwischen der ersten Scheibe 2 und der zweiten Scheibe 3 ist im äußeren Hohlraum, also im Raum zwischen Abstandhalter 4 und Seitenrand der Scheiben durch eine Randversiegelung 5 versiegelt. Die Randversiegelung 5 erfolgt beispielsweise durch einen Kleber oder eine Dichtschnur aus Polyvinylsulfid. Im Abstandshalter 4 kann zusätzlich ein Trocknungsmittel angeordnet sein, beispielsweise Silicagele. Das Trocknungsmittel bindet Feuchtigkeit aus dem Zwischenraum zwischen beiden Scheiben 2 und 3 und schützt so die transparente, elektrisch leitfähige Schicht 6 vor Korrosion. Der Zwischenraum 13 zwischen beiden Scheiben 2 und 3 ist mit Argon gefüllt. Die Isolierverglasung 1 weist beispielsweise einen Wärmedurchgangskoeffizienten von weniger als 1,1 W/m²K auf.

Die Schaltungsanordnung 7 ist über Zuleitungen 14 galvanisch mit der kapazitiven Sensorschaltfläche 9 der transparenten, elektrisch leitfähigen Schicht 6 verbunden. Die galvanische Verbindung erfolgt beispielsweise durch Löten, Klemmen oder Kleben mit einem elektrisch leitfähigen Kleber. Die Zuleitungen 14 werden bevorzugt aus der großflächigen, transparenten, elektrisch leitfähigen Schicht 10 strukturiert und am Scheibenrand beispielsweise über hier nicht dargestellte Flachleiter aus der Isolierverglasung 1 herausgeführt. Die Schaltungsanordnung 7 wird beispielsweise mit einer Betriebsspannung von 12 V oder 24 V betrieben.

Bei Berühren der Außenseite IV der zweiten Scheibe 3 im Bereich der kapazitiven Sensorschaltfläche 9 durch einen menschlichen Körper, beispielsweise durch eine Hand, ändert sich die Kapazität zwischen zwei Bereichen 6.1 und 6.2 der transparenten, elektrisch leitfähigen Schicht 6. Die Kapazitätsänderung wird durch die Sensorelektronik 7.1 der Schaltungsanordnung 7 gemessen. Bei Überschreiten eines Schwellwerts wird ein Schaltsignal ausgelöst. Das Schaltsignal wird einer Steuerelektronik 7.2 zugeführt, die den Färbungsgrad des elektrochromen Schichtsystems 8 steuert.

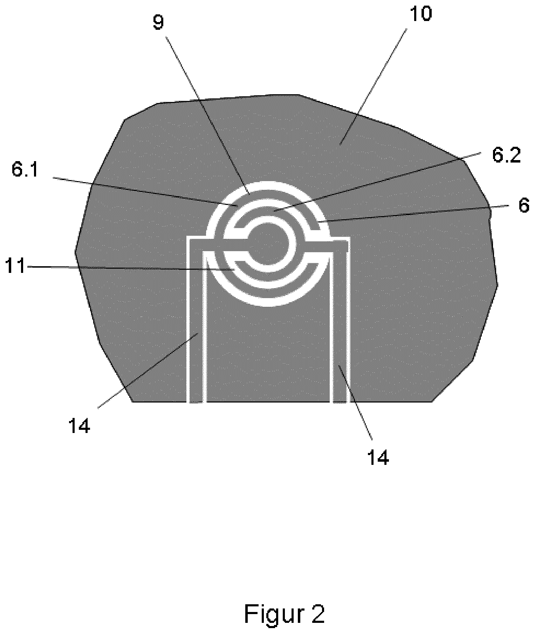

Figur 2 zeigt eine detaillierte Darstellung eines Ausgestaltungsbeispiels einer erfindungsgemäßen kapazitiven Sensorschaltfläche. Die einzelnen Bereiche 6.1 und 6.2 sind kammartig umeinander angeordnet. Durch die Anzahl der Kamm-Abschnitte und den Abstand des Bereichs 6.1 vom Bereich 6.2 lässt sich die Kapazität der kapazitiven Sensorschaltfläche 9 an die jeweiligen Gegebenheiten anpassen.

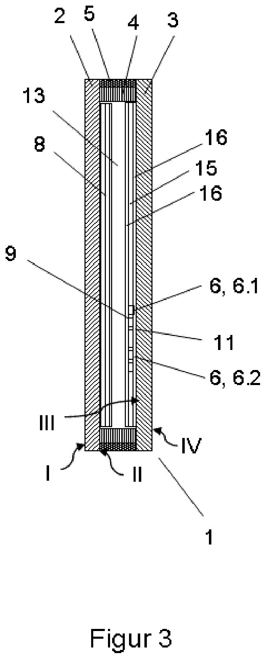

In Figur 3 ist eine Querschnittszeichnung einer alternativen Ausgestaltung der erfindungsgemäßen Isolierverglasung 1 entlang der Schnittlinie A-A' aus Figur 1A dargestellt. In dieser Ausgestaltung ist die transparente, elektrisch leitfähige Schicht 6, die die kapazitive Sensorschaltfläche 9 ausbildet, auf einer Folie aus Polyethylenterephthalat 15 angeordnet und beidseitig mit einer Klebefolie 16 aus Polyurethan 16 laminiert. Der Schichtverbund ist auf der Innenseite III der zweiten Scheibe 3 angeordnet und befestigt, beispielsweise durch Kleben.

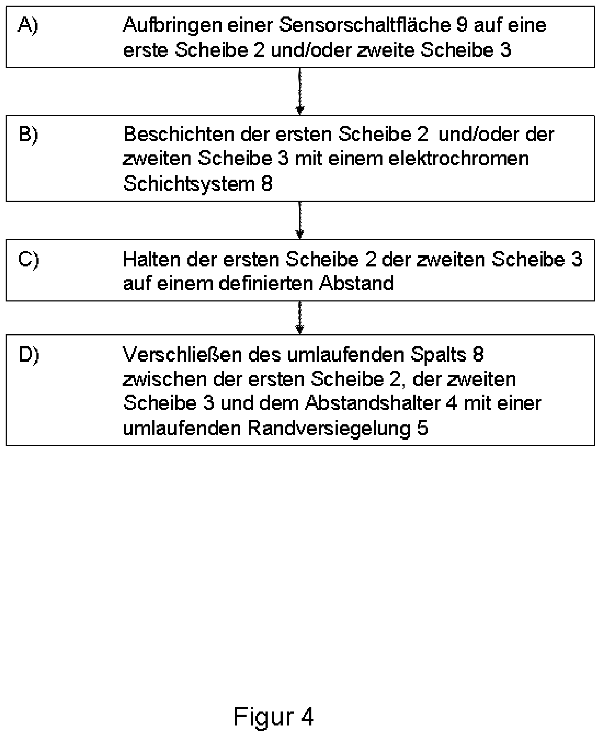

Figur 4 zeigt ein Ausführungsbeispiel der erfindungsgemäßen Verfahrensschritte anhand eines Flussdiagramms.

Durch die erfindungsgemäße Isolierverglasung 1 ergibt sich eine Reihe von Vorteilen im Vergleich zu Scheiben mit externen Schaltern oder Tastern nach dem Stand der Technik. Die geschlossene Oberfläche der erfindungsgemäßen Isolierverglasung 1 ist widerstandfähiger gegen Umwelteinflüsse, Reinigungsmittel und Vandalismus, beispielsweise Graffitis, als externe Schalter mit hervorstehenden Aufbauten. Die kapazitive Sensorschaltfläche 9 kann auf die gesamte Scheibenfläche ausgedehnt werden ohne deren optisches Erscheinungsbild und eine gewünschte Lichtdurchlässigkeit zu beeinträchtigen. Die kapazitive Sensorschaltfläche 9 kann innerhalb der Scheibenfläche frei positioniert werden. Diese Vorteile waren für den Fachmann überraschend und unerwartet.

Es zeigen:
- 1: Isolierverglasung
- 2: erste Scheibe
- 3: zweite Scheibe
- 4: Abstandshalter
- 5: Randversiegelung
- 6: transparente, elektrisch leitfähige Schaltfläche
- 6.1,6.2: Bereich von 6
- 7: Schaltungsanordnung
- 7.1: Sensorelektronik, Sensor Controller
- 7.2: Steuerelektronik, Electrochrome Controller
- 8: elektrochromes Schichtsystem
- 9: kapazitive Sensorschaltfläche
- 10: großflächige, transparente, elektrisch leitfähige Schicht
- 11: isolierender Bereich zwischen 6 und 10
- 13: Zwischenraum
- 14: Zuleitung
- 15: Polymerfolie, Polyethylenterephthalat-Folie
- 16: Klebefolie, Polyurethan-Folie
- I: Außenseite der ersten Scheibe 2
- II: Innenseite der ersten Scheibe 2
- III: Innenseite der zweiten Scheibe 3
- IV: Außenseite der zweiten Scheibe 3
- A-A': Schnittlinie

## Patentansprüche

1. Elektrochrome Isolierverglasung (1) mit kapazitiver Sensorschaltfläche (9), mindestens umfassend:
- eine erste Scheibe (2) mit Außenseite (I) und Innenseite (II) und eine zweite Scheibe (3) mit Innenseite (III) und Außenseite (IV), die am Rand mit einem Abstandshalter (4) miteinander verbunden sind und einen Zwischenraum (13) aufweisen und der Spalt (8) zwischen erster Scheibe (2), zweiter Scheibe (3) und Abstandshalter (4) eine umlaufende Randversiegelung (5) enthält,
- mindestens ein elektrochromes Schichtsystem (8), das auf der Innenseite (II) der ersten Scheibe (2) oder der Innenseite (III) der zweiten Scheibe (3) aufgebracht ist,
- mindestens eine transparente, elektrisch leitfähige Schicht (6), die mindestens teilweise auf mindestens der Innenseite (II) der ersten Scheibe (2), Außenseite (I) der ersten Scheibe (2), Innenseite (III) der zweiten Scheibe (3) oder Außenseite (IV) der zweiten Scheibe (3) aufgebracht ist, wobei
- die transparente, elektrisch leitfähige Schicht (6) eine kapazitive Sensorschaltfläche (9) ist,
wobei die kapazitive Sensorschaltfläche (9) mindestens ein elektrisch isolierter Bereich (6.1) einer großflächigen, transparenten, elektrisch leitfähigen Schicht (10), bevorzugt mit niedriger Emissivität für Infrarotstrahlung, ist und wobei der Zwischenraum (9) mit einem Gas oder einem Gasgemisch, bevorzugt mit Luft oder Inertgas, insbesondere mit Argon, Krypton oder Stickstoff, gefüllt ist, einen Unterdruck aufweist oder evakuiert ist.

2. Isolierverglasung nach Anspruch 1, wobei die transparente, elektrisch leitfähige Schicht (6) über eine Polymerfolie (15), bevorzugt eine Polyethylenterephthalat-Folie und/oder Polyurethan-Folie, mit der Innenseite (II) der ersten Scheibe (2) und/oder der Innenseite (III) der zweiten Scheibe (3) verbunden ist.

3. Isolierverglasung nach einem der Ansprüche 1 bis 2, wobei das elektrochrome Schichtsystem (8) auf der Innenseite (II) der ersten Scheibe (2) und die Sensorschaltfläche (9) auf der Innenseite (III) der zweiten Scheibe (3) angeordnet sind.

4. Isolierverglasung nach einem der Ansprüche 1 bis 3, wobei die transparente, elektrisch leitfähige Schicht (6) mindestens zwei voneinander elektrisch isolierte Bereiche (6.1) und (6.2) aufweist.

5. Isolierverglasung nach Anspruch 4, wobei die Bereiche (6.1, 6.2) der transparenten elektrisch leitfähigen Schicht (6) einen minimalen Abstand von ≤ 1 mm, bevorzugt von ≤ 0,5 mm und besonders bevorzugt von 0,01 mm bis 0,3 mm aufweisen.

6. Isolierverglasung nach einem der Ansprüche 1 bis 5, wobei die Fläche der transparenten, elektrisch leitfähigen Schicht (6) weniger als 50%, bevorzugt weniger als 25% und insbesondere weniger als 10% der Scheibe beträgt.

7. Isolierverglasung nach einem der Ansprüche 1 bis 6, wobei die transparente, elektrisch leitfähige Schicht (6) mindestens ein Metall enthält, bevorzugt Silber, Nickel, Chrom, Niob, Zinn, Titan, Kupfer, Palladium, Zink, Gold, Cadmium, Aluminium, Silizium, Wolfram oder Legierungen daraus, und/oder mindestens eine Metalloxidschicht, bevorzugt Zinn-dotiertes Indiumoxid (ITO), Aluminium-dotiertes Zinkoxid (AZO), Fluor-dotiertes Zinnoxid (FTO, SnO₂:F), Antimon-dotiertes Zinnoxid (ATO, SnO₂:Sb), und/oder Kohlenstoffnanoröhrchen und/oder optisch transparente, elektrisch leitfähige Polymere, bevorzugt Poly(3,4-ethylenedioxythiophene), Polystyrensulfonat, Poly(4,4-dioctylcylopentadithiophen), 2,3-Dichloro-5,6-dicyano-1,4-benzoquinon, Gemische und/oder Copolymere davon.

8. Isolierverglasung nach einem der Ansprüche 1 bis 7, wobei die transparente, elektrisch leitfähige Schicht einen Flächenwiderstand von 0,1 Ohm/Quadrat bis 200 Ohm/Quadrat, bevorzugt 1 Ohm/Quadrat bis 50 Ohm/Quadrat und besonders bevorzugt 1 Ohm/Quadrat bis 10 Ohm/Quadrat aufweist.

9. Isolierverglasung nach einem der Ansprüche 1 bis 8, wobei die erste Scheibe (2) und/oder die zweite Scheibe (3) vorgespanntes, teilvorgespanntes oder nichtvorgespanntes Glas, besonders bevorzugt Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische oder Schichtstrukturen davon oder eine Verbundsicherheitsscheibe mit einer oder mehreren thermoplastischen Zwischenschichten enthalten.

10. Isolierverglasung (1) nach einem der Ansprüche 1 bis 9, wobei der Abstand zwischen der ersten Scheibe (2) und der zweiten Scheibe (3) von 5 mm bis 20 mm und besonders bevorzugt von 10 mm bis 15 mm beträgt.

11. Anordnung mit elektrochromer Isolierverglasung (1) und kapazitiver Sensorschaltfläche (9) nach einem der Ansprüche 1 bis 10, wobei die kapazitive Sensorschaltfläche (9) und das elektrochrome Schichtsystem (8) mit einer Schaltungsanordnung (7) elektrisch leitend verbunden sind.

12. Verfahren zur Herstellung einer elektrochromen Isolierverglasung (1), wobei mindestens:
a. eine kapazitive Sensorschaltfläche (9) auf einer ersten Scheibe (2) und/oder zweiten Scheibe (3) aufgebracht wird,
b. die erste Scheibe (2) und/oder die zweite Scheibe (3) mit einem elektrochromen Schichtsystem (8) beschichtet wird,
c. die zweite Scheibe (3) und die erste Scheibe (2) mit einem Abstandhalter (4) auf einem definierten Abstand gehalten werden und
d. der Spalt (8) zwischen der ersten Scheibe (2), der zweiten Scheibe (3) und dem Abstandshalter (4) mit einer umlaufenden Randversiegelung (5) verschlossen wird,
wobei in Schritt a) die erste Scheibe (2) und/oder die zweite Scheibe (3) mit einer großflächigen transparenten, elektrisch leitfähigen Schicht (10) beschichtet wird und Bereiche (6.1, 6.2) der kapazitiven Sensorschaltfläche (9) durch Laserstrukturierung von der großflächigen transparenten, elektrisch leitfähigen Schicht (10) isoliert werden.

13. Verfahren zur Herstellung einer Isolierverglasung (1) nach Anspruch 12, wobei die kapazitive Sensorschaltfläche (9) auf eine Polymerfolie (15) aufgebracht wird und die Polymerfolie (15) im Schritt a) über eine Klebefolie (16) mit der ersten Scheibe (2) und/oder der zweiten Scheibe (3) verbunden wird.

14. Verwendung der Isolierverglasung (1) nach einem der Ansprüche 1 bis 10 oder der Anordnung mit Isolierverglasung (1) nach Anspruch 11 zur Verglasung von Gebäuden, insbesondere im Zugangs- oder Fensterbereich, als funktionales und/oder dekoratives Einzelstück und/oder als Einbauteil in Möbeln und Geräten oder zur Verglasung in einem Fahrzeug für den Verkehr auf dem Lande, in der Luft oder zu Wasser, insbesondere in Kraftfahrzeugen, beispielsweise als Fahrzeugtür oder Fahrzeugfenster, in Bussen, Straßenbahnen, U-Bahnen, Zügen für den Personenverkehr.

## Claims

1. Electrochromic insulating glazing (1) having a capacitive sensor switching surface (9), at least comprising:
- a first pane (2) having an outer side (I) and an inner side (II) and a second pane (3) having an inner side (III) and an outer side (IV) which are connected to a spacer (4) are connected to one another and have an intermediate space (13), and the gap (8) between the first pane (2), the second pane (3) and the spacer (4) comprises a circumferential edge seal (5),
- at least one electrochromic layer system (8) which is arranged on the inner side (II) of the first pane (2) or the inner side (III) of the second pane (3),
- at least one transparent, electrically conductive layer (6) which is arranged at least partially on at least the inner side (II) of the first pane (2), the outer side (I) of the first pane (2), inner side (III) of the second pane (3) or outer side (IV) of the second pane (3), wherein
- the transparent, electrically conductive layer (6) is a capacitive sensor switching surface (9),
wherein the capacitive sensor switching surface (9) is at least one electrically insulated region (6.1) of a large-area transparent electrically conductive layer (10), preferably with low emissivity for infrared radiation, and wherein the intermediate space (9) is filled with a gas or a gas mixture, preferably with air or inert gas, in particular with argon, krypton or nitrogen, has a negative pressure or is evacuated.

2. Insulating glazing according to claim 1, wherein the transparent, electrically conductive layer (6) is connected over a polymer film (15), preferably a polyethylene terephthalate film and/or polyurethane film, with the inner side (II) of the first pane (2) and/or the inner side (III) of the second pane (3).

3. Insulating glazing according to one of claims 1 through 2, wherein the electrochromic layer system (8) is arranged on the inner side (II) of the first disk (2) and the sensor switching surface (9) are arranged on the inner side (III) of the second disk (3).

4. Insulating glazing according to one of claims 1 through 3, wherein the transparent, electrically conductive layer (6) has at least two regions (6.1) and (6.2) which are electrically insulated from one another.

5. Insulating glazing according to claim 4, wherein the regions (6.1, 6.2) of the transparent electrically conductive layer (6) have a minimum distance of ≤ 1 mm, preferably of ≤ 0.5 mm and particularly preferably from 0.01 mm to 0.3 mm.

6. Insulating glazing according to one of claims 1 through 5, wherein the surface of the transparent, electrically conductive layer (6) is less than 50%, preferably less than 25% and in particular less than 10% of the pane.

7. Insulating glazing according to one of claims 1 through 6, wherein the transparent, electrically conductive layer (6) contains at least one metal, preferably silver, nickel, chromium, niobium, tin, titanium, copper, palladium, zinc, gold, cadmium, aluminum, silicon, tungsten or alloys thereof, and/or at least one metal oxide layer, preferably tin-doped indium oxide (ITO), aluminium-doped zinc oxide (AZO), fluorine-doped tin oxide (FTO, SnO₂:F), antimony-doped tin oxide (ATO, SnO₂:Sb), and/or carbon nanotubes and/or optically transparent, electrically conductive polymers, preferably poly (3,4-ethylenedioxythiophenes), polystyrene sulfonate, poly (4,4-dioctylcyclopentadithiophene), 2,3-dichloro -5,6-dicyano -1,4-benzoquinone, mixtures and/or copolymers thereof.

8. Insulating glazing according to one of claims 1 through 7, wherein the transparent, electrically conductive layer has a surface resistance of 0.1 ohm/square to 200 ohm/square, preferably 1 ohm/square to 50 ohm/square and particularly preferably 1 ohm/square to 10 ohm/square.

9. Insulating glazing according to one of claims 1 through 8, wherein the first pane and/or the second pane (3) contains prestressed, partially prestressed or non-prestressed glass, particularly preferably flat glass, float glass, quartz glass, borosilicate glass, soda-lime glass or clear plastics, preferably rigid clear plastics, in particular polyethylene, polypropylene, polycarbonate, polymethyl methacrylate, polystyrene, polyamide, polyester, polyvinyl chloride and/or mixtures or layer structures thereof or a composite safety pane having one or more thermoplastic intermediate layers.

10. Insulating glazing (1) according to one of claims 1 through 9, wherein the distance between the first pane (2) and the second disk (3) is from 5 mm to 20 mm and particularly preferably from 10 mm to 15 mm.

11. Arrangement with an electrochromic insulating glazing (1) and a capacitive sensor switching surface (9) according to one of claims 1 through 10, wherein the capacitive sensor switching surface (9) and the electrochromic layer system (8) are electrically conductively connected to a circuit arrangement (7).

12. Method for producing an electrochromic insulating glazing (1), wherein at least:
a. a capacitive sensor switching surface (9) is applied to a first pane (2) and/or second pane (3),
b. the first pane (2) and/or the second pane (3) is coated with an electrochromic layer system (8),
c. the second pane (3) and the first pane (2) are held at a defined distance by means of a spacer (4), and
d. the gap (8) between the first pane (2), the second pane (3) and the spacer (4) is closed by means of a circumferential edge seal (5),
wherein in step a) the first pane and/or the second pane (3) are provided with a large-area transparent, electrically conductive layer (10) and regions (6.1, 6.2) of the capacitive sensor switching surface (9) are isolated by laser structuring from the large-area transparent, electrically conductive layer (10).

13. Method for producing an insulating glazing (1) according to claim 12, wherein the capacitive sensor switching surface (9) is applied to a polymer film (15) and the polymer film (15) in step a) is connected by means of an adhesive film (16) to the first pane (2) and/or the second pane (3).

14. Use of the insulating glazing (1) according to one of claims 1 to 10 or the arrangement with insulating glazing (1) according to claim 11 for buildings glazing, in particular in the access or window region, as a functional and/or decorative single piece and/or as a built-in part in furniture and devices or for glazing in a vehicle for traffic on the land, in the air or in water, in particular in motor vehicles, for example as a vehicle door or vehicle window, in buses, trams, metros, trains for passenger traffic.

## Revendications

1. Vitrage isolant électrochromique avec (1) une surface de commutation capacitive à capteurs (9), comprenant au moins:
- une première vitre (2) avec une face externe (I) et une face interne (II et une deuxième vitre (3) avec une face interne (III) et une face externe (IV), qui sont reliées entre eux sur la périphérie par un écarteur (4) et présentent un espace (13) et la fente (8) entre la première vitre (2), la deuxième vitre (3) et l'écarteur (4) contient un joint de bord circonférentiel (5),
- au moins un système stratifié électrochromique (8), qui est appliqué sur la face interne (II) de la première vitre (2) ou la face interne (III)de la deuxième vitre (3),
- au moins une couche transparente (6) conductrice d'électricité, qui est appliquée au moins en partie sur au moins la face interne (II) de la première vitre (2), la face externe (I) de la première vitre (2), la face interne (III) de la deuxième vitre (3) ou la face externe (IV) de la deuxième vitre (3),
- la couche transparente (6) conductrice d'électricité est une surface de commutation capacitive à capteurs (9),
où la surface de commutation capacitive à capteurs (9) est au moins une zone isolé électriquement (6.1) d'une couche transparente conductrice d'électricité (10) couvrant une grande surface, de préférence à faible émissivité pour le rayonnement infrarouge, et où la fente (9) est remplie d'un gaz ou d'un mélange de gaz, de préférence de l'air ou d'un gaz inerte, en particulier de l'argon, du krypton ou de l'azote, est en dépression ou sous vide.

2. Vitrage isolant selon la revendication 1, où la couche transparente conductrice d'électricité (6) est reliée par le biais d'un film polymère (15), de préférence un film de polyéthylène téréphtalate et/ou un film de polyuréthane, avec la face interne (II) de la première vitre (2) et/ou la face interne (III) de la deuxième vitre (3).

3. Vitrage isolant selon l'une des revendications 1 ou 2 où le système de stratifié électrochromique (8) est disposé sur la face interne (II) de la première vitre (2) et la surface de commutation à capteurs (9) est disposée sur la face interne (III) de la deuxième vitre (3).

4. Vitrage isolant selon l'une des revendications 1 à 3, où la couche transparente conductrice d'électricité (6) présente au moins deux zones (6.1) et (6.2) électriquement isolées l'une de l'autre.

5. Vitrage isolant selon la revendication 4, où les zones (6.1, 6.2) de la couche transparente conductrice d'électricité (6) présentent une distance minimale de ≤ 1 mm de préférence de ≤0,5 mm et de manière particulièrement préférée de 0,01 mm à 0,3 mm.

6. Vitrage isolant selon l'une des revendications 1 à 5, où la surface de la couche transparente conductrice d'électricité (6) est inférieure à 50 %, de préférence inférieure à 25 % et en particulier inférieure à 10 % de la vitre.

7. Vitrage isolant selon l'une des revendications 1 à 6, où la couche transparente conductrice d'électricité (6) contient au moins un métal, de préférence de l'argent, du nickel, du chrome, du niobium, de l'étain, du titane, du cuivre, du palladium, de l'or, du cadmium, du zinc, de l'aluminium, du silicium, du tungstène ou des alliages de ceux-ci, et/ou au moins une couche d'oxyde métallique, de préférence de l'oxyde d'indium dopé à l'étain (ITO), de l'oxyde de zinc dopé à l'aluminium (AZO), de l'oxyde d'étain dopé au fluor (FTO, SnO₂ : F), de l'oxyde d'étain dopé à l'antimoine (ATO, SnO₂ : Sb), et/ou des nanotubes de carbone et/ou des polymères optiquement transparents conducteurs d'électricité, de préférence du poly(3,4-éthylène dioxythiophène), du poly(4,4-dioctylcylopentadithiophène) 2,3-dichloro-5,6-dicyano-1,4-benzoquinone des mélanges et/ou des copolymères de ceux-ci.

8. Vitrage isolant selon l'une des revendications 1 à 7, où la couche transparente conductrice d'électricité présente une résistance de surface de 0,1 ohm/carré à 200 ohms/carré, de préférence de 1 ohm/carré à 50 Ohms / carré et de manière particulièrement préféré de 1 ohm/carré à 10 ohms/carré.

9. Vitrage isolant selon l'une des revendications 1 à 8, où la première vitre (2) ou la deuxième vitre (3) contiennent du verre trempé, durci ou non trempé, en particulier du verre plat, du verre flotté, du verre de quartz, du verre borosilicaté, du verre sodocalcique ou des plastiques clairs de préférence des plastiques clairs rigides, en particulier du polyéthylène, du polypropylène, du polycarbonate, du polyméthacrylate de méthyle, du polystyrène, du polyamide, du polyester, du chlorure de polyvinyle et/ou des mélanges ou des structures stratifiées de ceux-ci ou un verre feuilleté de sécurité avec une ou plusieurs intercalaires thermoplastiques.

10. Vitrage isolant 10 (1) selon l'une des revendications 1 à 9, où l'écart entre la première vitre (2) et la deuxième vitre (3) est de 5 mm à 20 mm et de manière particulièrement préférée par 10 mm à 15 mm.

11. Arrangement avec un vitrage isolant électrochromique (1) et une surface de commutation capacitive à capteurs (9) selon l'une des revendications 1 à 10, où la surface de commutation capacitive à capteurs (9) et un système de couche électrochromique (8) est connectée de manière électriquement conductrice à un arrangement de circuit (7).

12. Procédures pour la production d'un vitrage isolant électrochromique (1), où au moins :
a. une surface de commutation capacitive à capteurs (9) est appliquée sur une première vitre (2) et/ou une deuxième vitre (3),
b. la première vitre (2) et/ou la deuxième vitre (3) est revêtue d'un système de couche électrochromique (8),
c. la deuxième vitre (3) et la première vitre (2) est maintenu à une distance définie d'un écarteur (4) et
d. la fente (8) entre la première vitre (2), la deuxième vitre (3) et l'écarteur (4) est scellée par un joint de bord circonférentiel (5),
où lors de l'étape a) couverts la première vitre (2) et/ou la deuxième vitre (3) est revêtue d'une couche transparente conductrice d'électricité (10) couvrant une grande surface et des zones (6.1, 6.2) de la surface de commutation capacitive à capteurs (9) sont isolées par structuration laser de la couche transparente conductrice d'électricité (10) couvrant une grande surface (10).

13. Procédure pour l'établissement d'un vitrage isolant (1) selon la revendication 12, où la surface de commutation capacitive à capteurs (9) est appliquée sur un film polymère (15) et à l'étape a) le film polymère (15) est reliée à la première vitre (2) et/ou la deuxième vitre (3) par le biais d'un film adhésif (16).

14. Utilisation du vitrage isolant (1) selon l'une des revendications 1 à 10 ou l'arrangement avec un vitrage isolant (1) selon la revendication 11 pour le vitrage des bâtiments, en particulier les zones d'accès ou les fenêtres, comme pièce fonctionnelle ou décorative ou dans le cadre de l'installation dans le mobilier et les équipements ou pour le vitrage dans les véhicules pour la circulation sur la terre, dans l'air ou dans l'eau, en particulier dans les véhicules automobiles, par exemple comme portière ou fenêtre de véhicule, dans les autobus, les tramways, les métros, les trains pour le transport de passagers.
